# EUROPEAN PATENT APPLICATION

(11) **EP 4 394 926 A1**
(43) Date of publication of application: **03.07.2024**
(21) Application number: 22861750.2
(22) Date of filing: 26.08.2022
(51) Int. Cl.: H01M 4/36, H01M 4/48, H01M 4/38, H01M 4/58, H01M 4/62, H01M 4/587, H01M 10/052, H01M 4/02

(54) **NEGATIVE ELECTRODE ACTIVE MATERIAL, METHOD FOR PREPARING SAME, AND LITHIUM SECONDARY BATTERY COMPRISING SAME**

(30) Priority: 27.08.2021 KR 20210113694
(71) Applicant: Hansol Chemical Co., Ltd, Seoul 06169 (KR)
(72) Inventor: KWON, Se-Man, Wanju-gun, Jeollabuk-do 55321 (KR); KANG, Sung-Hwan, Wanju-gun, Jeollabuk-do 55321 (KR); SHIM, Hyeon-Woo, Wanju-gun, Jeollabuk-do 55321 (KR); PARK, Byung-Hoon, Wanju-gun, Jeollabuk-do 55321 (KR); LEE, Jeong-Hun, Wanju-gun, Jeollabuk-do 55321 (KR)
(74) Representative: Louis Pöhlau Lohrentz
(86) International application number: PCT/KR2022/012801
(87) International publication number: WO 2023/027542

(57) **Abstract**

The present invention relates to a negative electrode active material including metal-containing particles, wherein at least one of the angles, each angle formed between a straight line connecting the center point of the negative electrode active material and the center point of each of the metal-containing particles and the long axis of a corresponding one of the metal-containing particles, is in a range of 60° to 90°. The present invention also relates to a method of manufacturing the negative electrode active material and to a lithium secondary battery including the negative electrode active material.

## Description

### Technical Field

The present invention relates to a negative electrode active material, a method of manufacturing the same, and a lithium secondary battery including the same. More particularly, the present invention relates to a negative electrode active material in which the orientation (angle) of metal-containing particles is adjusted to improve performance, a method of manufacturing the same, and a lithium secondary battery including the same.

### Background Art

Lithium ion batteries (LIBs) have been adopted and used as the main power source for mobile electronics due to their high energy density and ease of design, and their applications are expanding to electric vehicles and power storage devices for renewable energy.

Research into LIB materials with higher energy density, longer lifetime, and other beneficial properties is needed to enable new applications.

In particular, for negative electrode materials, study has been conducted on several materials, such as carbon, silicon, tin, and germanium.

Among them, silicon-based negative electrode materials have received a lot of attention due to their extremely high energy density compared to graphite cathode materials that are currently in commercial use.

However, silicon-based negative electrode materials have critical disadvantages, such as the formation of an unstable solid-electrolyte interphase (SEI) layer due to side reactions between the silicon surface and the electrolyte, which degrades electrochemical properties, or the crushing of the electrode material due to internal stress caused by the rapid volume expansion that occurs during charging and discharging.

To solve these problems, various surface treatments of silicon-based negative electrode materials have been studied to improve reversibility at the surface. Especially, surface coating or composite layer formation using carbon materials has been widely studied.

However, surface treatments using carbon materials require complex and expensive processes. On the other hand, while surface treatments using carbon materials have improved some of the properties of silicon-based negative electrode materials, the methods still have difficulty in realizing high-power, long-life, fast-charging/discharging lithium ion batteries (LIBs).

Therefore, there is a need to develop technologies for high-capacity silicon-based negative electrode active materials that can further improve the characteristics of batteries while suppressing the volume expansion of the silicon-based negative electrode active materials.

### [Documents of Related Art]

### [Patent Document]

(Patent Document 1) Korean Patent Application Publication No. 10-2019-0090024

### Disclosure

### Technical Problem

An objective of the present invention is to provide a negative electrode active material for long-life secondary batteries with high capacity and high energy density.

Another objective of the present invention is to provide a method of producing a negative electrode active material with high efficiency at low cost.

A further objective of the present invention is to provide an electrode and a lithium secondary battery each of which include the negative electrode active material.

The objectives to be achieved by the present disclosure are not limited to the ones mentioned above, and other objectives not mentioned above can be clearly understood by those skilled in the art from the following description.

### Technical Solution

According to one aspect of the present disclosure, there is provided a negative electrode active material including metal-containing particles,
oriented to satisfy a specific angular condition in which among angles, each angle formed between the major axis of each of the metal-containing particles and a straight line connecting a center point of a negative electrode active material and a center point of a corresponding one of the metal-containing particles,
at least one of the angles is in a range of 60° to 90°.

According to another aspect of the present disclosure, there is provided an electrode
including the negative electrode active material.

According to a further aspect of the present disclosure, there is provided a lithium secondary battery including: a negative electrode including the negative electrode active material;
a positive electrode positioned to face the negative electrode; and
an electrolyte interposed between the negative electrode and the positive electrode.

### Advantageous Effects

The negative electrode active material according to the present invention has the effect of enabling a long-life secondary battery with high capacity and high energy density.

The negative electrode active material has the effect of being produced with high efficiency at low cost.

### Description of Drawings

**FIG. 1** schematically illustrates an angle between the major axis of a metal-containing particle and a straight line connecting the center point of a negative electrode active material and the center point of the metal-containing particle according to an embodiment of the present invention;
**FIG. 2** schematically illustrates a negative electrode active material with a core-shell structure (a) and a negative electrode active material with a hollow structure (b), according to an embodiment of the present invention;
**FIG. 3** illustrates scanning electron microscopy (SEM) images of cross-sections of negative electrode active materials with a core-shell structure (a and b) and a hollow structure (c);
**FIG. 4** illustrates a charge-discharge curve of a cell using an electrode including the negative cathode active material of Example 1 and a charge-discharge curve of a cell using an electrode including the negative electrode active material of Comparative Example 2; and
**FIG. 5** illustrates measurement results of the capacity retention rate according to the number of charge-discharge cycles of cells one of which uses an electrode including the negative cathode active material of Example 1 and the other of which uses an electrode including the negative electrode active material of Comparative Example 2.

### Best Mode

Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe its invention in the best way possible.

The features of exemplary embodiments described herein are presented for illustrative purposes and do not exhaustively represent the technical spirit of the present disclosure. Accordingly, it should be appreciated that there will be various equivalents and modifications that can replace the exemplary embodiments at the time at which the present application is filed.

As used herein, the singular forms "a", "an", and "the" are intended to include the plural forms as well unless the context clearly indicates otherwise. It will be further understood that the terms "comprising", "including", or "having" when used in the present disclosure specify the presence of stated features, regions, integers, steps, operations, elements and/or components, but do not preclude the presence or addition of one or more other features, regions, integers, steps, operations, elements, components and/or combinations thereof.

As used herein to refer to numerical ranges, "a to b" and "a-b" are defined as "being equal to or greater than a (≥ a) and being equal to or less than b (≤ b)".

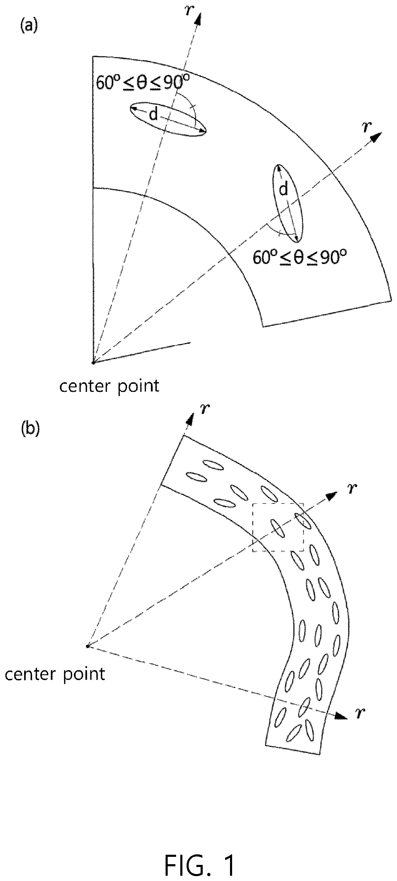

In one aspect of the present disclosure, there is provided a negative electrode active material including metal-containing particles as illustrated in FIG. 1, in which the metal-containing particles are oriented such that an angle of the major axis of each of at least one of the particles with respect to a straight line connecting the center point of a negative electrode active material and the center point of a corresponding one of the particles is in a range of 60° to 90°.

As illustrated in **FIG. 1a****,** the center point of the negative electrode active material may refer to a point at the center of a cross section of the negative electrode active material that is sectioned to include the central axis of the negative electrode active material in a cross section thereof.

When the negative electrode active material has a non-uniformly curved shape as illustrated in **FIG. 1b****,** the center point may be a point at the center of curvature of the negative electrode active material cross-sectioned to include the central axis of the negative electrode active material in a cross section thereof.

In addition, the center point of the metal-containing particle may refer to a point at the center of a cross section of the negative electrode active material that is sectioned to include the major axis or minor axis of the metal-containing particle.

The major axis may refer to the longest straight line of a cross-section passing the center point of the metal-containing particle, and the minor axis may refer to the shortest straight line of a cross section passing the center point of the metal-containing particle.

As illustrated in **FIG. 1****,** among angles (θ) formed between an imaginary straight line (r) that connects the center point of the negative electrode active material and the center point of each of the metal-containing particles and the major axis (d) of a corresponding one of the metal-containing particles, at least one angle (Θ) may be in a range of 60° to 90°.

The unit "°" of the angle (θ) is defined as one of 360 equal parts of one revolution, and 1° is equal to n/180 radians.

In addition, the negative electrode active material includes a core and a shell surrounding the core. The metal-containing particles includes at least one selected from the group consisting of Mg, Al, Si, Ca, Fe, Mg, Mn, Co, Ni, Zn, and Ge, and the metal-containing particles are present in the shell.

In particular, the metal-containing particles may be flaky and may have a major axis and a minor axis.

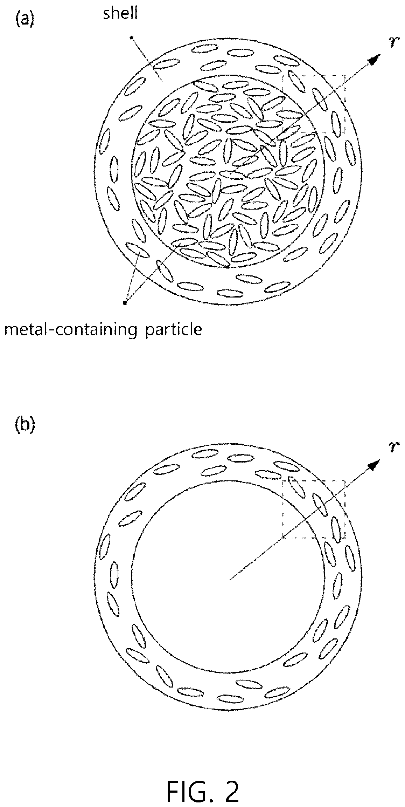

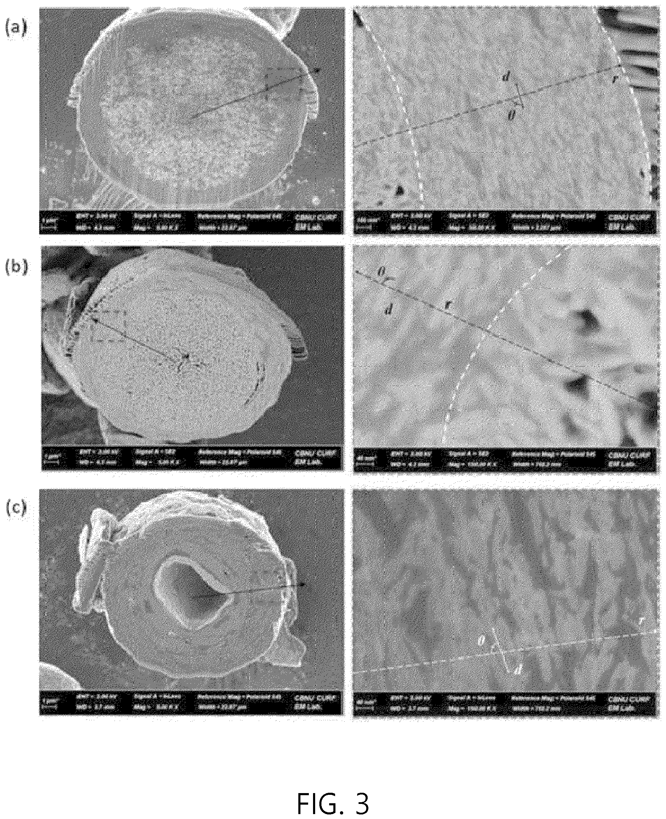

In one embodiment, in the negative electrode active material, the metal-containing particles may be additionally present in the core of the core-shell structure of the metal-containing particle as illustrated in **FIG. 2a****.** SEM images of negative electrode active materials observed to measure an angular fraction in the negative electrode active materials with a core-shell structure in which the metal-containing particles are present in the core are illustrated in **FIG. 3a and FIG. 3b****.**

The negative electrode active material may have a hollow structure with the core being empty as illustrated in FIG. 2B.

The SEM image of the negative electrode active material observed to measure an angular fraction in the hollow-structure negative electrode active material is illustrated in **FIG. 3c****.**

As illustrated in FIGS. 3a to 3c, each of the cells using the negative electrode active material with a core-shell structure or a hollow structure contains flaky metal-containing particles. As described above, an angle is formed between a straight line connecting to the center point of each of the metal-containing particles and the major axis of a corresponding one of the metal-containing particles, and at least one of the angles is in a range of 60° to 90°.

In one embodiment, a proportion of the number of the metal-containing particles satisfying the angular condition in which at least one of the angles is in a range of 60° to 90° to a total number of the metal-containing particles present in the shell is 40% or more.

That is, an angular fraction that refers to a ratio of the number of the flaky metal-containing particles satisfying a specific angular condition with respect to a total number of the flaky metal-containing particles present in the shell is 40% or more when the specific angular condition is a condition in which at least one angle between a straight line connecting the center point of the metal-containing particle and the center point of the negative electrode active material and the major axis of the metal-containing particle is in a range of 60° to 90°.

For example, the angular fraction may be 40% or more, 50% or more, 60% or more, 70% or more, 80% or more, 90% or more, or 100%.

As the angular fraction of the negative electrode active material is increased, the initial electrode expansion rate and operational electrode expansion rate of the negative electrode using the negative electrode active material decrease, so that the lifespan characteristics of the battery can be improved.

In one embodiment, the metal particles may be particles containing silicon (Si) (hereinafter, referred to as Si-containing particles) . The SI-containing particle may be at least one selected from the group consisting of silicon particles, silicon oxide particles, silicon carbide particles, and silicon alloy particles.

In addition, the Si-containing particles may have an average particle diameter D50 of 80 nm or more and 200 nm or less and may be represented by Chemical Formula 1 shown below.

[Chemical Formula 1] SiOx (0≤x≤0.5)

When x exceeds 0.5 in Chemical Formula 1, there may be a disadvantageous effect in terms of battery capacity and efficiency. In other words, lithium ions react with oxygen to produce an irreversible product such as Li₂O, Li-silicate (LiₓSi_{y}O_{z}), etc. Therefore, lithium ions having reacted with the negative electrode material cannot return to the electrolyte or positive electrode material and are trapped inside the negative electrode, so that the entire capacity of the battery cannot be used, and the battery efficiency is lowered.

In addition, for example, the silicon carbide may be SiC, and the silicon alloy may be, for example, a Si-Z alloy in which Z is an element selected from alkali metals, alkaline earth metals, Group 13 elements, Group 14 elements, transition metals, rare earth elements, and combinations thereof but is not silicon (Si) .

The average particle diameter of the silicon-containing particles is a size measured with a particle size meter (Mastersizer3000, Malvern Panalytical Ltd.) and an organic solution in which the silicon-containing particles are dispersed.

When the average particle diameter of the silicon-containing particles exceeds 200 nm, high battery capacity can be obtained, but battery life may be short. On the other hand, when the average particle diameter of the silicon-containing particles is smaller than 80 nm, battery capacity and efficiency are low, and the manufacturing cost may increase.

In one embodiment, the average particle diameter of the crystal grains of the metal-containing particles may be 13 nm or more and 18 nm or less.

When the crystal grain size of the metal-containing particles is smaller than 13 nm, the sizes may be advantageous in terms of battery lifespan but disadvantageous in terms of battery capacity. When the crystal grain size of the metal-containing particles exceeds 18 nm, the sizes may be disadvantageous in terms of battery manufacturing cost and lifespan stability.

The degree of sphericity (length of minor axis/length of major axis) of the metal-containing particles may be 0.5 or less.

In one embodiment, the negative electrode active material may include 40% by weight or more and 80% by weight or less of a carbon-based material.

In the XRD diffraction pattern of the carbon-based material, a characteristic peak may appear at 25° or higher and 27° or lower, and the full width at half maximum of the peak may be 0.1 or more and 0.5 or less.

The carbon-based material may be either or both of amorphous carbon and crystalline carbon.

In one embodiment, the amorphous carbon may be at least one selected from the group consisting of coal-based pitch, mesophase pitch, petroleum-based pitch, tar, coal-based oil, petroleum heavy oil, organic synthetic pitch, sucrose, naphthalene resin, polyvinyl alcohol resin, furfuryl alcohol resin, polyacrylonitrile resin, polyamide resin, phenol resin, furan resin, cellulose resin, styrene resin, epoxy resin or vinyl chloride resin, block copolymer, polyol, and polyimide resin.

The crystalline carbon may be any one or more selected from the group consisting of natural graphite, artificial graphite, expanded graphite, graphene, carbon black, and fullerene.

The natural graphite is naturally occurring graphite. Flake graphite, highly crystalline graphite, and amorphous (also called microcrystalline or cryptocrystalline) graphite are natural graphite. The artificial graphite is artificially synthesized graphite. The artificial graphite is made by heating amorphous carbon to high temperature. Primary graphite (also called electrographite), secondary graphite, and graphite fiber are artificial graphite.

The expanded graphite is produced by intercalating chemicals such as acids or alkalis between graphite layers and heating the laminate to vertically expand the molecular structure of the graphite layers. The graphene includes single-layer graphene and multilayer graphene.

The carbon black is a crystalline material with less regularity than graphite. The carbon black turns into graphite when heated to approximately 3,000°C for a long time. The fullerene is a polyhedral bundle-shaped compound consisting of 60 or more carbon atoms, and a carbon mixture containing at least 3% by weight of fullerene is called fullerene. The primary carbon-based material may include one type of crystalline carbon or a mixture of two or more types of crystalline carbon. For example, natural graphite or artificial graphite can be used. The crystalline carbon may have a spherical, plate-like, fibrous, tubular, or powder form.

Preferably, pitch can be used as the amorphous carbon. The peach used herein may have a softening point of 100°C to 250°C. Particularly, petroleum-based or coal-based pitch in which the content of quinolone insoluble (QI) components is 5% by weight or less and more preferably 1% by weight or less can be used.

Preferably, natural graphite may be used as the crystalline carbon. As the graphite, high purity grade with a fixed carbon content of 99% by weight or more and more preferably 99.95% by weight or more may be used.

The flaky graphite may be suitable for increasing conductivity through contact with the metal-containing particles.

In one embodiment, the core may further contain amorphous carbon, and the shell may contain crystalline carbon.

However, in the case of a negative electrode active material with a hollow structure, the core may not contain a carbon-based material.

Specifically, the shell may be made mostly of crystalline carbon, and the carbon component added to the core may be mostly amorphous carbon.

The shell may contain a small amount of amorphous carbon, and the core may contain a small amount of crystalline carbon.

When the core contains a small amount of crystalline carbon, the specific gravity of graphite may increase as the distance from the center of the core increases.

The amorphous carbon of the core may be located between the metal particles and surround each of the metal particles. In other words, in the core, the amorphous carbon may serve as a matrix, and the metal particles are dispersed in the matrix.

The carbon component in each of the shell and core may play a role in alleviating the volume expansion of the metal-containing particles during charging and discharging.

In one embodiment, the average particle diameter D50 of the negative electrode active material may be in a range of 5 nm to 20 nm.

The shell of the negative electrode active material may have a thickness in a range of 5 µm to 10 µm.

The core of the negative electrode active material may have pores. The pores can reduce the initial irreversible capacity of a battery and help alleviate the volume expansion of the metal-containing particles.

A method of manufacturing a negative electrode active material according to another aspect of the present disclosure may include the steps of: mixing metal-containing particles, amorphous carbon, and crystalline carbon to form a composite; and heat-treating the composite.

The metal may be one or more selected from Si, Al, Ti, Mn, Ni, Cu, V, Zr, Mn, Co, Fe, and Nb.

In one embodiment, the mixing step may use a physical method.

The physical method may include any one or more selected from the group consisting of high-energy-consuming processes such as milling, stirring, mixing, and compression.

For example, the mixing step may be performed by ball milling. In particular, a planetary ball mill can efficiently mix and grind the mixture by rotating and revolving the components of the mixture in a non-contact manner.

Balls that can be used in ball milling may be, for example, zirconia balls, and there is no limit to the type of ball. The size of the balls may be, for example, in a range of from about 0.3 mm to 10 mm, but is not limited thereto.

By controlling the rotational speed for the milling in the mixing step, the angular fraction of the metal-containing particles included in the shell of the negative electrode active material can be adjusted. As the rotational speed of milling is increased, the angular fraction of metal-containing particles can be increased.

The reaction time of the mixing step is in a range of 1 minute to 24 hours, the reaction temperature is in a range of 40°C to 250°C, and the reaction may be carried out in an air or inert gas ambient.

In one embodiment, the treatment temperature in the heat treatment step may be in a range of 700°C to 1,100°C.

The heat treatment time is not particularly limited, but may be, for example, in a range of 10 minutes to 24 hours.

An electrode according to a further aspect of the present disclosure includes the negative electrode active material described above. A lithium secondary battery according to a further aspect of the present disclosure includes the electrode including the negative electrode active material as a negative electrode; a positive electrode positioned to face the negative electrode, and an electrolyte disposed between the negative electrode and the positive electrode.

The negative electrode includes the negative electrode active material. For example, the negative electrode can be manufactured by mixing the negative electrode active material, a binder, and optionally a conductive additive in a solvent to prepare a negative electrode active material composition, and then shaping the solution into a certain shape or applying the solution on a current collector such as copper foil.

In addition to the negative electrode active material described above, the negative electrode may further include a negative electrode active material commonly used as a negative electrode active material for lithium batteries in the art to which the present disclosure pertains. Commonly used negative electrode active materials may include, for example, one or more selected from the group consisting of lithium metal, metals alloyable with lithium, transition metal oxides, non-transition metal oxides, and carbon-based materials.

For example, the metals alloyable with lithium include Si, Sn, Al, Ge, Pb, Bi, Sb Si-Y alloy (where Y is an alkali metal, an alkaline earth metal, a Group 13 element, a Group 14 element, a transition metal, a rare earth element, or a combination thereof, but is not Si), and Sn-Y alloy (Y is an alkali metal, an alkaline earth metal, a group 13 to 16 element, a transition metal, a rare earth element, or a combination thereof, but is not Sn). Examples of Y may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

For example, the transition metal oxide may be a lithium titanium oxide, a vanadium oxide, a lithium vanadium oxide, or the like.

For example, the non-transition metal oxide is SnO₂, SiOₓ (0 <x≤2), or the like. The carbon-based material may be crystalline carbon, amorphous carbon, or a mixture thereof. the crystalline carbon may be graphite, such as natural or artificial graphite, which may be amorphous, plate-shape, flaky, spherical, or fibrous, and the amorphous carbon may be soft carbon (carbon calcined at low temperature), hard carbon, mesophase pitch carbide, calcined coke, or the like.

When the negative electrode active material and the carbon-based material are used in combination, the oxidation reaction of the silicon-based active material is suppressed, and an SEI film is effectively formed to provide a stable film, which improves electrical conductivity and the charge and discharge characteristics of lithium.

A typical negative electrode active material may be blended with the negative electrode active material described above, applied to the surface of the negative electrode active material described above, or used together in any other combined form.

The binder used in the negative electrode active material composition is a component that assists the bonding of the negative electrode active material and the conductive additive and the bonding to the current collector, and is added in an amount of 1 to 50 parts by weight, based on 100 parts by weight of the negative electrode active material. For example, the binder may be added in an amount of 1 to 30 parts by weight, 1 to 20 parts by weight, or 1 to 15 parts by weight, based on 100 parts by weight of the negative electrode active material.

Examples of such binders include polyvinylidene fluoride, polyvinylidene chloride, polybenzimidazole, polyimide, polyvinylacetate, polyacrylonitrile, polyvinyl alcohol, carboxymethylcellulose (CMC), starch, hydroxypropyl cellulose, regenerated cellulose, polyvinylpyrrolidone, tetrafluoroethylene, polyethylene, polypropylene, polystyrene, polymethyl methacrylate, polyaniline, acrylonitrile butadiene styrene, phenolic resin, epoxy resin, polyethylene terephthalate, polytetrafluoroethylene, polyphenylsulfide, polyamideimide, polyetherimide, polyethylene sulfone, polyamide, polyacetal, polyphenylene oxide, polybutylene terephthalate, ethylenepropylene-diene polymer (EPDM), sulfonated EPDM , styrene butadiene rubber, fluorine rubber, and various copolymers.

The negative electrode may optionally further include a conductive additive to further improve electrical conductivity by providing a conductive path to the negative electrode active material.

The conductive material may be any of those commonly used in lithium batteries, and examples thereof include: carbon-based materials such as carbon black, acetylene black, **Ketjenblack,** carbon fiber (for example, vapor grown carbon fiber); metal-based materials such as metal powders or metal fibers of copper, nickel, aluminum, silver, and the like; conductive polymers such as polyphenylene derivatives; and mixtures thereof. The content of the conductive additive can be adjusted appropriately. For example, the weight ratio of the negative electrode active material and the conductive additive may be added in a range of 99:1 to 90:10.

As the solvent, N-methylpyrrolidone (NMP), acetone, water, etc. may be used. The content of the solvent is 1 to 10 parts by weight, based on 100 parts by weight of the negative electrode active material. When the content of the solvent is within the above range, it is easy to form an active material layer.

The current collector has an overall thickness of 3 to 500 µm. The material of the current collector is not particularly limited if it is conductive and does not cause chemical change in the battery. For example, copper, stainless steel, aluminum, nickel, titanium, or calcined carbon may be used for the current collector. Alternatively, a copper or stainless steel base coated with carbon, nickel, titanium or silver may be used. Further alternatively, an aluminum-cadmium alloy may be used.

In addition, the surface of the current collector may be provided with fine irregularities to enhance the binding to the negative electrode active material. The current collector may be in the form of film, sheet, foil, net, a porous body, foam, or a nonwoven body.

A negative electrode can be manufactured by directly applying the prepared negative electrode active material composition on the surface of a current collector. Alternatively, a negative electrode can be obtained by forming a negative electrode active material film on a separate support member by a casting method, peeling off the film, and laminating the film on a copper-foil current collector. The negative electrode is not limited to the forms described above and may have any form other than those described above.

The negative electrode active material composition is not only used to manufacture electrodes for lithium secondary batteries but can also be used for printable batteries by being printed on a flexible electrode substrate.

Separately from the preparation of the negative electrode, a positive electrode active material composition containing a positive electrode active material, a conductive additive, a binder, and a solvent is prepared to manufacture a positive electrode.

The positive electrode active material is a lithium-containing metal oxide, and any material commonly used in the technical field can be used.

For example, a compound represented by one of the following chemical formulas may be used: LiₐA_{1-b}B_{b}D₂ (in the formula, 0.90≤a≤1.8 and 0≤b≤0.5); LiₐE_{1-b}B_{b}O_{2-c}D_{c} (in the formula, 0.90≤a≤1.8, 0≤b≤0.5, and 0≤c≤0.05); LiE_{2-b}B_{b}O_{4-c}D_{c} (in the formula, 0≤b≤0.5, 0≤c≤0.05); LiₐNi_{1-bc}Co_{b}B_{c}Dα (in the formula, 0.90≤a1.8, 0≤b≤0.5, 0≤c≤0.05, and 0<α≤2 ); LiₐNi_{1-bc}Co_{b}B_{c}O_{2-α}F_{α} (in the formula, 0.90≤a≤1.8, 0≤b≤0.5, 0≤c≤0.05, and 0<α<2); LiₐNi_{1-bc}Co_{b}B_{c}O_{2-α}F_{α} (in the formula, 0.90≤a≤1.8, 0≤b≤0.5, 0≤c≤0.05, and 0<α<2); LiₐNi_{1-bc}Mn_{b}B_{c}D_{α} (in the formula, 0.90≤a≤1.8, 0≤b≤0.5, 0≤c≤0.05, and 0<α≤2); LiₐNi_{1-bc}Mn_{b}B_{c}O_{2-α}F_{α}, (in the formula, 0.90≤a≤1.8, 0≤b≤0.5, 0≤c≤0.05, and 0<α<2); LiₐNi_{1-bc}Mn_{b}B_{c}O_{2-α}F_{α} (in the formula, 0.90≤a≤1.8, 0≤b≤0.5, 0≤c≤0.05, and 0<α<2); LiₐNi_{b}E_{c}G_{d}O₂ (in the formula, 0.90≤a≤1.8, 0≤b≤0.9, 0≤c≤0.5, and 0.001≤d≤0.1); LiₐNi_{b}Co_{c}Mn_{d}GeO₂ (in the formula, 0.90≤ₐ≤1.8, 0≤b≤0.9, 0≤c≤0.5, 0≤d≤0.5, and 0.001≤e≤0.1); LiₐNiG_{b}O₂ (in the formula, 0.90≤a1.8 and 0.001≤b≤0.1.); LiₐCoG_{b}O₂ (in the formula, 0.9≤a≤1.8 and 0.001≤b≤b≤0.1.); LiₐMnG_{b}O₂ (in the formula, 0.9≤a≤1.8 and 0.001≤b≤0.1.); LiₐMn₂G_{b}O₄ (in the formula, 0.9≤a≤1.8 and 0.001≤b≤0.1.); QO₂; QS₂; LiQS₂; V₂O₅; LiV₂O₅; LiIO₂; LiNiVO₄; Li(_{3-f})J₂(PO₄)₃(0≤f≤2); Li_{(3-f)}Fe₂(PO₄)₃(0≤f≤2); and LiFePO₄.

In the formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Alternatively, one of the compounds having a coating layer on the surface thereof may be used. Further alternatively, a mixture of one of the compounds listed above and one of the coated compounds may be used. The coating layer may contain a compound of a coating element, such as an oxide, hydroxide, oxyhydroxide, oxycarbonate, or hydroxycarbonate of the coating element. The compound that makes up the coating layer may be amorphous or crystalline. The coating elements included in the coating layer may include Mg, Al, Co, K, Na, Ca, Si, Ti, V, Sn, Ge, Ga, B, As, Zr, or any mixture thereof. For the coating layer formation process, any coating method may be used if the compound coated with the coating element does not negatively affect the physical properties of the positive electrode active material. For example, spray coating, dipping, etc. may be used. Since such methods are well-understood by persons ordinarily skilled in the art, the details of the methods will not be described herein.

For example, LiNiO₂, LiCoO₂, LiMnₓO₂ₓ (x=1, 2), LiNi₁₋ₓMnₓO₂ (0<x<1), LiNi_{1-xy}CoₓMn_{y}O₂ (0≤x≤0.5, 0≤y≤0.5), LiFeO₂, V₂O₅, TiS, MoS, etc. can be used.

In the positive electrode active material composition, the conductive additive, binder, and solvent may be the same as those used in the negative electrode active material composition described above. In some cases, a plasticizer may be added to each of the positive electrode active material composition and the negative electrode active material composition to obtain a porous electrode plate. The content of each of the positive electrode active material, conductive agent, binder, and solvent is a level commonly used in lithium batteries.

The positive electrode current collector has a thickness of 3 to 500 um, and the material of the positive electrode current collector is not particularly limited if the material has high conductivity and does not cause chemical change in the battery. For example, stainless steel, aluminum, nickel, titanium, or calcined carbon may be used. Alternatively, stainless steel or aluminum treated with carbon, nickel, titanium, silver, or the like on the surface thereof may be used. The surface of the current collector may have fine irregularities to enhance the binding to the positive electrode active material. The current collector may be in the form of film, sheet, foil, net, a porous body, foam, or a nonwoven body.

The prepared positive electrode active material composition may be directly coated and dried on the positive electrode current collector to produce a positive electrode plate. Alternatively, the positive electrode active material composition can be cast on a separate support member to form a positive electrode active material film, the film is then peeled off, and the film is laminated on the positive electrode current collector to produce a positive electrode plate.

The positive electrode and the negative electrode can be isolated by a separator. As the separator, any separator commonly used in lithium batteries can be used. In particular, a separator that has low resistance against ion movement in an electrolyte and has excellent electrolyte retention ability is suitable. For example, a material selected from glass fiber, polyester, Teflon, polyethylene, polypropylene, polytetrafluoroethylene (PTFE), and combinations thereof is suitable. The separator may be in the form of non-woven or woven fabric. The separator has a pore diameter of 0.01 to 10 µm and a thickness of 5 to 300 µm.

A lithium salt-containing non-aqueous electrolyte is composed of a non-aqueous electrolyte and lithium. Examples of the non-aqueous electrolyte include non-aqueous electrolyte solutions, solid electrolytes, and inorganic solid electrolytes.

As the non-aqueous electrolyte solution, aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, acetonitrile, nitromethane, methyl formate, methyl acetate, phosphoric acid triester, trimethoxy methane, dioxorane derivatives, sulfolane, methyl sulfolane, 1,3-dimethyl-2-imidazolidinone, propylene carbonate derivatives, tetrahydrofuran derivatives, ethers, methyl propionate, and ethyl propionate may be used.

As the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, poly vinylidene fluoride, polymers containing ionic dissociation groups, etc. may be used.

As the inorganic solid electrolyte, for example, nitrates, halides, and sulfates of Li, such as Li₃N, LiI, LiₛNI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂ may be used.

As the lithium salt, any lithium salt that can be commonly used in lithium batteries can be used. For easy dissolution in the non-aqueous electrolyte, one or more materials selected from LiCl, LiBr, LiI, LiClO₄, LiBF₄, LiB₁₀Ch₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carbonate lithium, 4-phenyl lithium borate, and imide may be used.

Lithium secondary batteries can be classified into lithium ion batteries, lithium ion polymer batteries, and lithium polymer batteries depending on the type of separator and electrolyte used, can be classified into cylindrical, prismatic, coin, and pouch batteries depending on the shape, and can be classified into bulk type and thin film type depending on the size.

Since the manufacturing methods of these batteries are widely known in the technical field of the present disclosure, a detailed description thereabout will be omitted.

### Mode for Carrying out the Invention

Hereinafter, the present disclosure will be described in more detail with reference to examples and comparative examples, but the scope of the present disclosure is not limited thereby.

### [Example 1]

Spherical porous secondary particles composed of flaky silicon particles (with an average particle diameter (D₅₀) of 100 nm) were mixed with pitch and graphite at a weight ratio of 1:1:1 in a THF solvent. The mixture was then placed in a reactor and milled at a rotation speed of 15,000 rpm, and compositing was performed for 15 minutes. Afterwards, the resultant was heated to a temperature of 950°C in a nitrogen-ambient furnace. Thus, a reaction product was obtained. The prepared reaction product was classified through a 325 mesh to obtain a negative electrode active material.

### [Example 2]

A negative electrode active material was manufactured in the same manner as in Example 1, except that the milling rotation speed in the compositing process was 10,000 rpm.

### [Example 3]

A negative electrode active material was manufactured in the same manner as in Example 1, except that the milling rotation speed in the compositing process was 20,000 rpm.

### [Comparative Example 1]

A negative electrode active material was manufactured in the same manner as in Example 1, except that the milling rotation speed in the compositing process was 3,000 rpm.

### [Comparative Example 2]

Spherical porous secondary particles composed of flaky silicon particles (with an average particle diameter (D₅₀) of 100 nm) were mixed with pitch and graphite at a weight ratio of 1:1:1 in a THF solvent. The solvent was heated and dried at 60°C to perform compositing. Afterwards, the resultant was heated to a temperature of 950°C in a nitrogen-ambient furnace. Thus, a reaction product was obtained. The prepared reaction product was classified through a 325 mesh to obtain a negative electrode active material.

### [Comparative Example 3]

A negative electrode active material was prepared in the same manner as in Example 1, except that spherical silicon particles (with an average particle diameter (D₅₀) of 100 nm) was used.

### [Preparation Example]

### Production of coin-type half cell

Negative electrode slurries were prepared. Each slurry was prepared by uniformly mixing one of the respective negative electrode active materials according to Examples 1 to 3 and Comparative Examples 1 to 3, a conductive additive (Super P), and a binder (SBR-CMC) at a weight ratio of 93:3:4.

Each of the prepared negative electrode slurries was applied on a 20-µm copper-foil current collector. The coated electrode plates were dried at 120°C for 30 minutes and pressed to obtain negative electrodes.

Coin-type half cells (CR2032) were manufactured. Each of the coin-type half cells included: the prepared negative electrodes, lithium metal as a counter electrode, a PE separator, and an electrolyte. The electrolyte was a solution containing 1.0 M LiPF₆ dissolved in a mixed solvent in which ethylene carbonate (EC), diethyl carbonate (DEC), and dimethyl carbonate (DMC) were mixed at a volume ratio of 3:5:2.

### Production of coin-type full cell

Coin-type full cells were manufactured using the negative electrodes used for the coin-type half cells. In the cells, the anodes were manufactured by a method described below. LiNi_{0.6}Co_{0.2}Mn_{0.2}O₂ as a positive electrode active material and PVA-PAA as a binder were mixed at a weight ratio of 1:1 to prepare a positive electrode slurry. The positive electrode slurry was applied to an aluminum-foil current collector with a thickness of 12 µm and dried at 120°C for 15 minutes. The resulting plate was then pressed to produce a positive electrode.

CR2032 coin-type full cells were manufactured. Each of the cells used the negative and positive electrodes prepared as described above, a PE separator, and an electrolyte. The electrolyte was prepared by dissolving 1.5 M LiPF₆ in a mixed solvent of EC:DEC:DMC (2:1:7 at a volume ratio) and 20% of FEC.

### Evaluation Example 1: Analysis of negative electrode active materials

The characteristics of the negative electrode active materials of Examples 1 to 3 and Comparative Examples 1 to 3 were analyzed, and the results are shown in Table 1 below.

**[Table 1]**

| | Angular fraction (%) | Sphericity | Si grains (nm) | Carbon (C) Full width at half maximum (FWHM) | Oxygen (%) | Average particle size of secondary particles (µm) |
|---|---|---|---|---|---|---|
| Example 1 | 80 | 0.3 | 14.7 | 0.16 | 5.1 | 11.4 |
| Example 2 | 65 | 0.3 | 15.1 | 0.16 | 5.2 | 12.7 |
| Example 3 | 90 | 0.3 | 14.2 | 0.21 | 4.9 | 10.8 |
| Comparative Example 1 | 35 | 0.3 | 14.3 | 0.21 | 5.3 | 21.8 |
| Comparative Example 2 | 15 | 0.3 | 15.2 | 0.16 | 5.2 | 18.7 |
| Comparative Example 3 | - | 1.0 | 12.1 | 0.17 | 5.7 | 11.9 |

In Table 1, the angular fraction refers to a ratio of the number of flaky silicon particles present in the shell of the negative electrode active material and satisfying a specific angular condition to a total number of the flaky silicon particles present in the shell of the negative electrode active material, in which the specific angular condition is a condition in which an angle between the major axis of the flaky silicon particle and a straight line connecting the center point of the negative electrode active material and the center point of the flaky silicon particle contained in the shell is in a range of 60° to 90°.

The angular fraction was measured by performing focused ion beam (FIB) processing on the negative electrode active materials of Examples 1 to 3 and Comparative Examples 1 to 3, and then observing the cross section of each of the negative electrode active materials by scanning electron microscopy (SEM).

It was confirmed that the angular fraction was adjusted by controlling the rotational speed of milling in the compositing step. That is, as the rotational speed of milling was increased, the angular fraction was also increased.

In addition, the sphericity was expressed by observing the flaky silicon particles by SEM, measuring the lengths of the minor and major axes of the flaky silicon particles, and calculating the ratio of the length of the minor axis to the length of the major axis.

The size of Si crystal grains was measured by X-ray diffraction (XRD). That is, the size of the crystal grains of the metal particles was measured by applying the Scherrer equation to a specific peak measured by XRD.

In addition, the full width at half maximum (FWHM) of the carbon-based material was measured through X-ray diffraction (XRD) of the negative electrode active material. The XRD diffraction peak of the carbon-based material appears at 25° to 27°.

The content of oxygen was measured with an oxygen analyzer (O836, LECO Corporation). In other words, the prepared negative electrode active material was placed in a carbon crucible and heated to a high temperature to generate CO and CO₂, and the content of oxygen was calculated by measuring the amount of the generated CO and CO₂.

The average particle diameter of the secondary particles was measured with a particle size meter (Mastersizer3000, Malvern Panalytical Ltd.) and an organic solution in which the flaky silicon particles are dispersed.

### Evaluation Example 2: Analysis of characteristics of electrodes

The characteristics of the negative electrodes using the negative electrode active materials of Examples 1 to 3 and Comparative Examples 1 to 3 were analyzed, and the results are shown in Table 2 below.

**[Table 2]**

| | Initial electrode expansion rate (%) | Electrode expansion rate (%) |
|---|---|---|
| Example 1 | 14.2 | 24.4 |
| Example 2 | 16.3 | 26.4 |
| Example 3 | 14.2 | 26.4 |
| Comparative Example 1 | 20.3 | 34.6 |
| Comparative Example 2 | 22.3 | 32.5 |
| Comparative Example 3 | 18.3 | 32.5 |

The initial electrode expansion rate and electrode expansion rate in Table 2 were calculated using Equations 1 and 2 shown below. Initial electrode expansion rate [%] = [electrode thickness at first charge/initial electrode thickness] X 100 Electrode expansion rate [%] = [electrode thickness at 100th charge/initial electrode thickness] X 100

In Equations 1 and 2 above, the initial electrode thickness is the thickness of an electrode measured immediately after the electrode is manufacturing. That is, the initial electrode thickness is measured before the first cycle of charging and discharging is performed.

It was confirmed that both the initial electrode expansion rate and the electrode expansion rate of the electrode using one of the respective negative electrode active materials of Examples 1 to 3 with a high angular fraction were lower than the initial electrode expansion rate and the electrode expansion rate of the electrode using one of the respective negative electrode active materials of Comparative Examples 1 to 3 with a low angular fraction.

Therefore, it was confirmed that the initial electrode expansion rate and electrode expansion rate could be reduced by adjusting the angular fraction of the negative electrode active material and consequently, the battery performance could be maximized.

### Evaluation Example 3: Analysis of characteristics of batteries

The characteristics of batteries each using one of the negative electrode active materials of Examples 1 to 3 and Comparative Examples 1 to 3 were analyzed, and the results are shown in Table 3 below.

**[Table 3]**

| | Initial capacity (mAh/g) | Initial efficiency (%) | Lifespan characteristics (%) |
|---|---|---|---|
| Example 1 | 1324.4 | 87.7 | 86.4 |
| Example 2 | 1332.5 | 83.6 | 82.3 |
| Example 3 | 1298.4 | 88.0 | 86.2 |
| Comparative Example 1 | 1357.1 | 79.7 | 81.0 |
| Comparative Example 2 | 1289.0 | 74.1 | 77.1 |
| Comparative Example 3 | 1339.3 | 81.2 | 78.4 |

The battery characteristics of the coin-type half cells and coin-type full cells manufactured using the negative electrode active materials prepared in Examples 1 to 3 and Comparative Examples 1 to 3 were evaluated by a method described below.

The coin-type full cells were used to measure lifespan characteristics, and the coin-type half cells were used to evaluate other battery characteristics.

Each of the coin-type half cells prepared using the negative electrode active materials of Examples 1 to 3 and Comparative Examples 1 to 3 was charged by constant current (CC) charging at 25°C at a current of 0.1 C until the voltage reached 0.01 V (vs. Li), and then charged by constant voltage (CV) charging at a voltage of 0.01 V until the current reached 0.05 C. The fully charged cells were rested for 10 minutes, and then the cells were discharged at a constant current of 0.1 C until the voltage reached 1.5V (vs. Li) (2 times, initial formation). The unit "C" is the discharge rate of a cell and is obtained by dividing the total capacity of the cell by the total discharge time.

Each of the coin-type full cells prepared using the negative electrode active materials of Examples 1 to 3 and Comparative Examples 1 to 3 was charged by constant current (CC) charging at 25°C at a current of 0.1 C until the voltage reached 4.2 V (vs. Li), and then charged by constant voltage (CV) charging at a voltage of 4.2 V until the current reached 0.05 C. The fully charged cells were rested for 10 minutes, and then the cells were discharged by CC discharging at a current of 0.1 C until the voltage reached to 2.7 V (vs. Li) at the time of discharging.

Next, the cells were charged by CC charging at 25°C at a current rate of 1.0 C until the voltage reached 4.2 V (vs. Li), and then by CV charging at a voltage of 4.2 V until the current reached to 0.05 C. The fully charged coin-type cells were rested for 10 minutes, and then the cells were discharged by CC discharging at a current of 1.0 C until the voltage reached to 2.7 V (vs. Li). The cycle of charging and discharging was repeated (1 to 100 cycles).

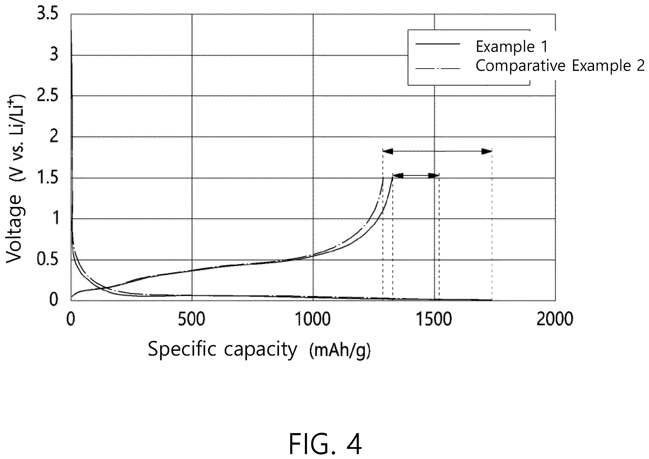

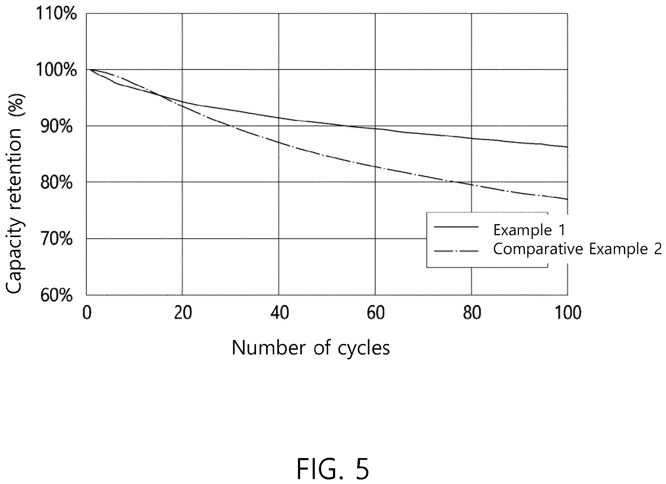

The charge/discharge curves of the cells using the negative electrode active materials of Example 1 and Comparative Example 2 and the capacity maintenance rates according to the number of charge/discharge cycles are shown in FIGS. 4 and 5.

The initial discharge capacity in Table 3 refers to the discharge capacity in the first cycle.

The initial efficiency and lifespan characteristics were calculated by Equations 3 and 4 below, respectively.Initial efficiency [%] = [Discharge capacity in the first cycle/Charge capacity in the first cycle] X 100Lifespan characteristics [%] = [Discharge capacity in 100th cycle/Discharge capacity in the first cycle] X 100

It was confirmed that the initial efficiency and lifespan characteristics of the batteries manufactured using the negative electrode active materials of Examples 1 to 3 were improved compared to the batteries manufactured using the negative electrode active materials of Examples 1 to 3.

The improvements in battery characteristics are assumed to be due to decreases in the initial electrode expansion rate and operational electrode expansion rate of the electrodes using the negative electrode active materials of Examples 1 to 3 with the controlled angular fractions.

The scope of the present disclosure is defined by the following claims rather than the above detailed description, and all changes or modifications derived from the meaning and scope of the claims and their equivalent concepts should be interpreted to fall within the scope of the present disclosure.

### Industrial Applicability

The negative electrode active material according to the present invention has the effect of enabling a long-life secondary battery with high capacity and high energy density.

The negative electrode active material has the effect of being produced with high efficiency at low cost.

## Claims

1. A negative electrode active material comprising metal-containing particles oriented to satisfy a specific angular condition in which among angles, each angle being formed between a major axis of each of the metal-containing particles and a straight line connecting a center point of the negative electrode active material and a center point of a corresponding one of the metal-containing particles, at least one of the angles is in a range of 60° to 90°.

2. The negative electrode active material of claim 1, wherein the negative electrode active material comprises a core and a shell surrounding the core,
the metal-containing particles comprise at least one metal selected from the group consisting of Mg, Al, Si, Ca, Fe, Mg, Mn, Co, Ni, Zn, and Ge, and
the metal-containing particles are present in the shell.

3. The negative electrode active material of claim 2, wherein the core contains the metal-containing particles or is empty.

4. The negative electrode active material of claim 2, wherein a ratio of the number of the metal-containing particles satisfying the specific angular condition in which at least one of the angles is in a range of 60° to 90°, to a total number of the metal-containing particles present in the shell is 40% or more.

5. The negative electrode active material of claim 1, wherein the metal-containing particles comprise at least one silicon-containing particle selected from the group consisting of silicon particles, silicon oxide particles, silicon carbide particles, and silicon alloy particles.

6. The negative electrode active material of claim 5, wherein the silicon-containing particles have an average particle diameter D50 in a range of 80 to 200 nm and are represented by the following Formula 1:
[Formula 1] SiOx (0≤x≤0.5).

7. The negative electrode active material of claim 1, wherein an average diameter D50 of crystal grains of the metal-containing particles is in a range of 13 to 18 nm.

8. The negative electrode active material of claim 1, wherein the metal-containing particles have a sphericity (ratio of length of minor axis to length of major axis) of 0.5 or less.

9. The negative electrode active material of claim 1, wherein the negative electrode active material comprises 40% by weight or more and 80% by weight or less of a carbon-based material.

10. The negative electrode active material of claim 9, wherein an XRD diffraction peak of the carbon-based material appears at 25° or higher and 27° or lower, and
a full width at half maximum (FWHM) of the peak is 0.1 or more and 0.5 or less.

11. The negative electrode active material of claim 2, wherein the core comprises amorphous carbon and
the shell comprises crystalline carbon.

12. The negative electrode active material of claim 1, wherein the negative electrode active material has an average particle diameter (D50) in a range of 5 to 20 pm.

13. An electrode comprising the negative electrode active material of any one of claims 1 to 12.

14. A lithium secondary battery comprising:
a negative electrode comprising the negative electrode active material of any one of claims 1 to 12;
a positive electrode positioned to face the negative electrode; and
an electrolyte positioned between the anode and the cathode.
